**Europäisches Patentamt**

**European Patent Office**

**Office européen des brevets**

(19)

(11) Veröffentlichungsnummer : **0 397 997 B1**

(12)

# EUROPÄISCHE PATENTSCHRIFT

(45) Veröffentlichungstag der Patentschrift :
30.12.92 Patentblatt 92/53

(51) Int. Cl.$^5$ : **B60H 1/00**

(21) Anmeldenummer : **90105738.0**

(22) Anmeldetag : **26.03.90**

(54) Heiz- und Klimagerät für ein Kraftfahrzeug.

(30) Priorität : **19.05.89 EP 89109072**
**19.05.89 DE 8906222 U**
**20.12.89 DE 8914901 U**

(43) Veröffentlichungstag der Anmeldung :
**22.11.90 Patentblatt 90/47**

(45) Bekanntmachung des Hinweises auf die
Patenterteilung :
**30.12.92 Patentblatt 92/53**

(84) Benannte Vertragsstaaten :
**DE ES FR GB**

(56) Entgegenhaltungen :
**EP-A- 0 216 104**
**DE-A- 1 655 121**
**FR-A- 1 192 960**
**US-A- 4 586 652**

(73) Patentinhaber : **SIEMENS**
**AKTIENGESELLSCHAFT**
**Wittelsbacherplatz 2**
**W-8000 München 2 (DE)**

(72) Erfinder : **Hildebrand, Reinhard, Dipl.-Ing. (FH)**
**Hauptstrasse 11**
**W-8627 Redwitz (DE)**

## Beschreibung

Die Erfindung bezieht sich auf ein Heiz- bzw. Klimagerät für ein Kraftfahrzeug gemäß Oberbegriff des Anspruchs 1; ein derartiges Heiz- und Klimagerät ist aus der US-A-4 586 652 bekannt.

Bei dem bekannten vorgenannten Heiz- und Klimagerät mit luftseitiger Temperatureinstellung wird der von einem Gebläse über einen Verdampfer geförderte Luftstrom je nach Stellung einer Luftklappe direkt als Kaltluft oder als über einen Wärmetauscher geleitete Warmluft mit jeweils entsprechend einem Lufttemperatur-Einstellelement am Bediengerät im Frontraum des Kraftfahrzeugs einstellbarem Mischungsverhältnis in eine frontraumseitige Haupt-Mischkammer geleitet, an deren Ausgang in üblicher Weise ein Defroster-Luftkanal, ein Fußraum-Luftkanal und ein Mittelebene-Luftkanal angeschlossen sind, der zu einer oder mehreren Düsen, vorzugsweise im Armaturenbrett, führt. Um die fondraumseitige Mischkammer mit untemperierter bzw. temperierter Luft zu versorgen, sind neben einen gesonderten Sauggebläse in der fondraumseitigen Mischkammer insgesamt drei Luftkanäle aus der Frontraumluftkammer abgezweigt, von denen ein erster hinter dem Verdampfer, jedoch vor dem Wärmetauscher und dessen vorgeschalteter Luftklappe, der zweite direkt hinter dem Wärmetauscher und der dritte aus der Haupt-Mischkammer austreten. Mittels einer Fondraum-Mischluftklappe an der gemeinsamen Einmündung des ersten und zweiten abgezweigten Kanals in die Fondraum-Luftkammer kann der reine Kaltluftstrom zum Fondraum unabhängig von einer Fondraum-Regelung entweder ganz blockiert oder nur als Anteil einen aus dem Frontraum-Luftkanal abgesaugten temperierten Luftanteil beigemischt werden.

Um auf einfache Weise das Klima im gesamten Fahrzeuginnenraum nicht nur vom vorderen Frontraum steuern, sondern auch eine unterschiedliche Behaglichkeit zwischen dem vorderen Frontraum und dem hinteren Fondraum mit einfachen Mitteln erreichen zu können, ist erfindungsgemäß ein Heiz- und Klimagerät der eingangs genannten Art durch die Konstruktion gemäß der Lehre des Anspruchs 1 ergänzt bzw. erweitert; vorteilhafte Ausgestaltungen der Erfindung sind jeweils Gegenstand der Unteransprüche.

Die erfindungsgemäße Konstruktion eines Heiz- bzw. Klimagerätes ermöglicht unter Mitverwendung bekannter, nur vom Frontraum bedienbaren Anlage zur Belüftung, Heizung bzw. Klimatisierung des Fahrgastinnenraums durch wenige ergänzende Bauteile auch eine weitgehende individuelle, vom Frontraum unabhängige Fondraum-Klimatisierung, wobei die zweite, zum Fondraum geöffnete Mischkammer und die in dieser Mischkammer vorgesehene Fondraum-Mischluftklappe die von der Eingangs- bzw. Ausgangsseite des für Front-und Fondraum gemeinsamen Wärmetauscher abzuzweigende Kalt- bzw. Wärmeluftströme zusätzlich vom Fondraum mischbar sind und wobei durch den Kaltluftdurchlaß in der Luftklappe an der Eintrittsseite des Wärmetauschers in jeder frontseitigen Klappenstellung bzw. Temperatureinstellung im Wärmetauscher im Fondraum bei fondraumseitiger Einstellung ein Frischluftanteil, insbesondere auch eine reine Frischluft, zumischbar bzw. zuführbar ist; anstelle der Frischluft kann auch bei Vorhandensein einer sogenannten Umluftklappe ein Umluftanteil treten.

In konstruktiv besonders einfacher Art ist nach einer Ausgestaltung der Erfindung vorgesehen, daß die Frontraum-Mischluftklappe, die Fondraum-Mischluftklappe und die Luftklappe an der Eingangsseite des Wärmetauschers von einem frontraumseitigen Temperatur-Einstellelement in Verstellabhängigkeit von einem frontraumseitigen Temperatur-Einstellelement gestellt sind; dies kann z.B. in vorteilhafter Weise durch ein Koppelgestänge unmittelbar zwischen den jeweiligen Klappen, durch eine gemeinsame Kulissenführung oder durch eine elektrische Welle zwischen den jeweils durch Einzelmotoren schwenkbaren Klappen geschehen.

Die Erfindung sowie weitere vorteilhafte Ausgestaltungen der Erfindung werden im folgenden anhand eines schematisch dargestellten Ausführungsbeispiels in der Zeichnung näher erläutert; darin zeigen:

FIG 1 die Draufsicht auf ein Frontraum-Bediengerät,

FIG 2 die Draufsicht auf ein Fondraum-Bediengerät,

FIG 3 in einem Schnitt ein erfindungsgemäßes Heiz- bzw. Klimagerät,

FIG 4 eine Draufsicht auf die Luftklappe an der Eintrittsseite des Wärmetauschers bzw. die Fondraum-Mischluftklappe jeweils mit ausgesparter Frischluft-Öffnung,

FIG 5 in einem Teilausschnitt aus FIG 3 die fondraumseitige Mischkammer mit einer Fondraum-Mischluftklappe mit Frischluftdurchlaß in ihrer oberen Schließstellung,

FIG 6 die Anordnung gemäß FIG 5 mit einer ersten Öffnungsstellung der Fondraum-Mischluftklappe,

FIG 7 die Anordnung gemäß FIG 5, 6 mit einer weiteren Öffnungsstellung der Fondraum-Mischluftklappe,

FIG 8 die Anordnung gemäß FIG 5 bis 7 mit der unteren Schließstellung der Fondraum-Mischluftklappe,

FIG 9 in einem perspektivischen Schnittbild die fondraumseitige Mischkammer.

In einem Kunststoffgehäuse 1 wird von einem eingangsseitigen Gebläse 9 Frisch- bzw. Umluft einem nachgeschalteten Verdampfer 7 zugeführt. Der aus dem Verdampfer 7 ausströmende Kaltluftstrom gelangt bei dem im Ausführungsbeispiel die Eintrittsseite zum Wärmetauscher 8 in voller Absperrstellung verschließende Luftklappe 6 und bei der in voller Öffnungsstellung dargestellten Frontraum-Mischluftklappe 2 direkt in die frontraumseitige Mischkammer 11 und von dort je nach eingestellter Luftverteilung mit möglichen Zwischenstellungen in einen Front-Fußraumluftkanal 13, in einen Front-Defrosterluftkanal 14 oder in Front-Mittelebeneluftkanäle 15; 15, wobei einer zu einer Mitteldüse und ein anderer zu Seitendüsen im Armaturenbrett führt.

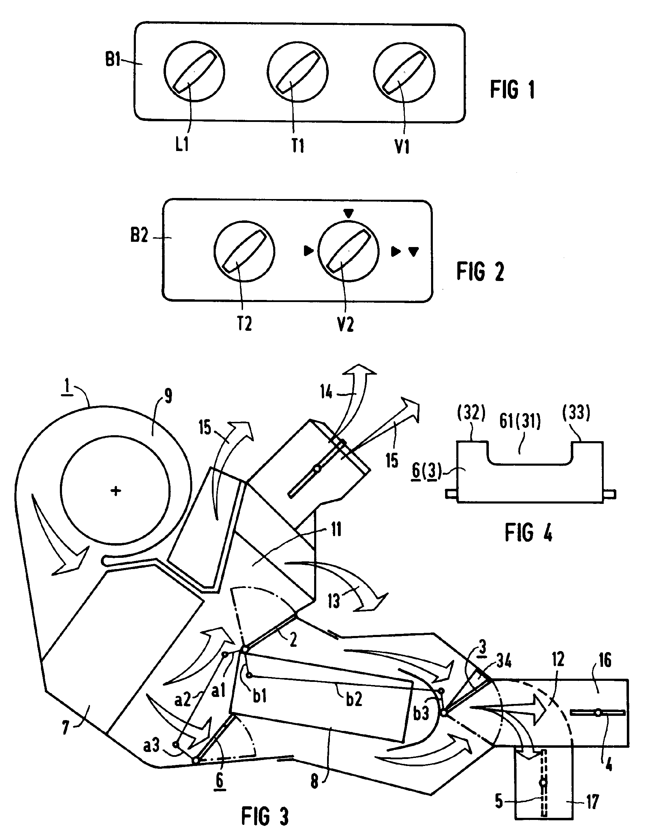

Zur Einstellung der Temperatur dient an einem in FIG 1 dargestellten Bediengerät B1 ein Lufttemperatur-Einstellelement T1; die Luftverteilung erfolgt über ein Luftverteilungs-Einstellelement V1 durch Öffnen bzw. Schließen von Absperrklappen in den einzelnen Luftkanälen; über ein Luftmengen-Einstellelement L1 können z.B. verschiedene Drehzahlstufen des die Luft fördernden Gebläses 9 eingestellt werden. Die Temperatureinstellung vom Bediengerät B1 erfolgt bei der dargestellten luftseitigen Einstellung durch Verstellen der Luftklappe 6 und der frontseitigen Mischluftklappe 2 und bei hier nicht dargestellter wasserseitiger Einstellung vor allem durch den Wasserdurchfluß im Wärmetauscher 8; in jedem Fall ist gewährleistet, daß unabhängig von der frontraumseitigen Einstellung des Luftanteils durch den Wärmetauscher 8 bzw. durch den Warmwasseranteil im Wärmetauscher ein Kaltluftanteil durch eine aus FIG 4 ersichtliche Öffnung 61 in der Luftklappe 6 in die fondraumseitige Mischkammer 12 gelangen kann.

Soll in Abhängigkeit von der Einstellung am Lufttemperatur-Einstellelement T1 am Frontraum-Bediengerät B1 der in die vorgenannten Luftkanäle geförderten Luft ein Warmluftanteil beigemischt werden, so wird zumindest ein Teil des aus dem Verdampfer austretenden Kaltluftstromes auf dem Umweg über den Wärmetauscher 8 in die frontraumseitige Mischkammer 11 geleitet. Die Frontraum-Mischluftklappe 2 und die Luftklappe 6 sind über ein Koppelgestänge a1; a2; a3 miteinander gekoppelt; ihre Einstellung bestimmt den Anteil der aus dem Verdampfer 7 in den Wärmetauscher 8 eintretenden Luft mit jeweils entsprechend der Einstellung am Lufttemperatur-Einstellelement T1 bestimmten Mischungsverhältnis aus Kaltluft und Warmluft.

Erfindungsgemäß ist nun in konstruktiv einfacher Weise das Kunststoffgehäuse 1 mit einer zum Fondraum gerichteten Erweiterung versehen, die eine fondraumseitige Mischkammer 12 mit einer Fondraum-Mischluftklappe 3 enthält. Die fondraumseitige Mischkammer 12 ist eingangsseitig sowohl an die Eingangsseite als auch an die Ausgangsseite des Wärmetauschers 8 angeschlossen, wobei durch die jeweilige Stellung der Fondraum-Mischluftklappe 3 der jeweilige Anteil der von der Eingangsseite des Wärmetauschers 8 zuströmenden Kaltluft bzw. der von der Ausgangsseite des Wärmetauschers 8 zuströmenden Warmluft einstellbar ist. In jedem Fall ist gewährleistet, daß erfindungsgemäß unabhängig von der frontraumseitigen Einstellung des Luftanteils durch den Wärmetauscher 8, d.h. insbesondere bei frontraumseitig geschlossener Luftklappe 6 und gleichzeitig aufgrund der Ankopplung zur Ausgangsseite des Wärmetauschers 8 geschlossener Frontraum-Mischluftklappe 2 über die erfindungsgemäß in der Luftklappe 6 vorgesehene Öffnung 61 ein Frischluftdurchlaß zur Fondraum-Mischkammer 12 gegeben ist.

Ausgangsseitig mündet die fondraumseitige Mischkammer 12 in einen Fondraum-Luftkanal 16 bzw. zumindest einen Fond-Fußraum-luftkanal 17 mit jeweils einer zusätzlichen Fondraum-Absperrluftklappe 4 im Fondraum-Luftkanal 16 und einer Fond-FußraumAbsperrklappe 5 im Fond-Fußraum-Luftkanal 17. Im dargestellten Ausführungsbeispiel gemäß FIG 3 ist die Fondraum-Mischluftklappe 3 über ein Koppelgestänge b1; b2; b3 mit der Frontraum-Mischluftklappe 2 und der Absperrklappe 6 in Mitnahmeverbindung gestellt. Ausgehend von der dargestellten einen Endstellung, d.h. bei voller Frischluftzufuhr direkt über die geöffnete, dabei die Ausgangsseite des Wärmetauschers 8 absperrende Frontraum-Mischluftklappe 2 und gesperrter Fondraum-Mischluftklappe 3 mit trotzdem über die Öffnung 61 zur Fondraum-Mischkammer 12 gelangender Frischluft sind bis zur gegenüberliegenden Endstellung jegliche Zwischenstellungen möglich.

Mit besonders geringem Aufwand läßt sich die zusätzliche Steuerung für eine weitgehend vom Frontraum unabhängige individuelle Fondraumklimatisierung dadurch verbessern, daß die Fondraum-Mischluftklappe 3 in gemeinsame Verstellabhängigkeit zur Frontraum-Mischluftklappe gestellt und über ein Fronttemperatur-Einstellelement T1 am frontraumseitigen Bediengerät B1 einstellbar ist; zweckmäßigerweise sind dabei die Absperrklappen 4 bzw. 5 in den zum Fondraum und/oder zum Fond-Fußraum führenden Luftkanälen 16 bzw. 17 der fondraumseitigen Mischkammer 12 in korrespondierende Miteinstellabhängigkeit von dem Luftverteilungs-Einstellelement V1 gestellt.

Zur weiteren Komfortsteigerung ist nach einer Ausgestaltung der Erfindung ein zusätzliches Fondraum-Bediengerät B2 mit einem Lufttemperatur-Einstellelement T2 und einem Luftverteilungs-Einstellelement V2 vorgesehen; dabei ist dann mit dem Lufttemperatur-Einstellelement T2 die Fondraum-Mischluftklappe 3 und mit dem Luftverteilungs-Einstellelement V2 die Absperrklappen 4, 5 in Verstellabhängigkeit gestellt, wobei auch bei der in FIG 3 dargestellten einen Endstellung der Luftklappe 6 durch deren randseitige Öffnung 61 Frischluft zum Fondraum gelangen kann.

Eine weitere Komfortsteigerung ist nach einer Ausgestaltung bei dem erfindungsgemäßen Heiz- bzw. Klimagerät durch konstruktive Mittel möglich, durch die, insbesondere bei Beginnen der Öffnung der Fondraum-Mischluftklappe aus ihrer Schließstellung zur Ausgangsseite des Wärmetauschers dem Luftkanal zum Fond-Fußraum ein höherer Warmluftanteil zuführbar ist als dem Luftkanal zum Fondraum. Ein dem entsprechender Temperaturverlauf mit zum Fußraum erwärmter und demgegenüber der Mittelebene bzw. dem Kopfraum weniger erwärmter Temperatur wird insbesondere bei einem Winter-Heizbetrieb als sehr behaglich empfunden.

Ein erstes besondes einfaches konstruktives Mittel zur Erzielung der vorbeschriebenen Komfortsteigerung besteht in zumindest einer Luftleitschaufel 34 an der Mischluftklappe 3 im Sinne einer stärkeren Luftströmung in Richtung der Mündung des Luftkanals 17 zum Fond-Fußraum, wobei zweckmäßigerweise der Luftkanal zum Fondraum 16 lufttechnisch von dem Luftkanal zum Fond-Fußraum getrennt ist.

Dem Luftkanal 16 zum Fondraum ist im Vergleich zum Luftkanal 17 zum Fond-Fußraum ein erhöhter oder überhaupt ein Frischluft anteil in weiterer komfortsteigender Weise mit einfachen Mitteln dadurch zumischbar, daß nach einer zweckmäßigen Ausgestaltung der Erfindung für die Fondraum-Mischluftklappe 3 ein Frischluftdurchlaß, insbesondere in Form einer Öffnung 31 ähnlich der Öffnung 61 in der Luftklappe 6 und ein Vorlauf der Öffnung der Austrittsseite des Wärmetauschers zu dem Luftkanal 16 zum Fondraum bei Bewegung der Mischluftklappe 3 aus ihrer Schließstellung zur Austrittsseite des Wärmetauschers 8 derart vorgesehen ist, daß bei beginnen der Öffnung der Mischluftklappe 3 aus ihrer Schließstellung zur Austrittsseite des Wärmetauschers 8 nur warme Luft in den Luftkanal 17 zum Fond-Fußraum eintreten kann, während die Öffnung zum Luftkanal 16 zum Fondraum von der Mischluftklappe 3 noch weiter verschlossen gehalten wird.

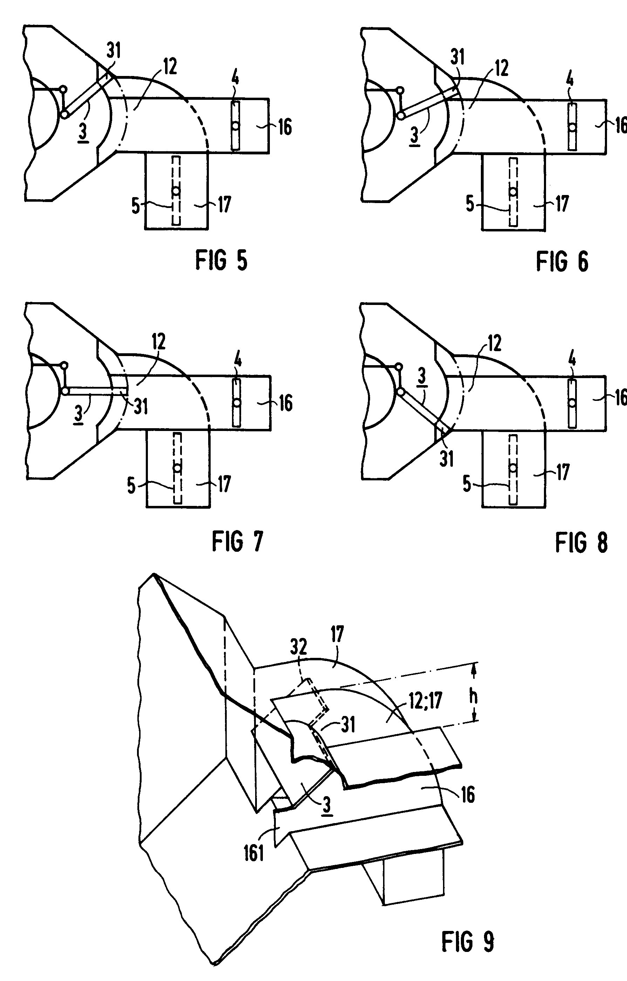

In konstruktiv besonders einfacher Weise ist dazu eine mittige Frischluftdurchlaß-Öffnung 31 an der oberen Randseite der Mischluftklappe 3 mit seitlichen höher liegenden Randbereichen 32, 33 vorgesehen, die den entsprechend gegenüber dem Luftkanal 16 zum Fondraum höheren Luftkanal bzw. Luftkanälen 17, 17 zum Fond-Fußraum zugeordnet sind. Die Frischluftbeimischmöglichkeit durch die Frischluftdurchlaß-Öffnung 31 in der Fondraum-Mischluftklappe 3 wird im folgenden anhand der FIG 5 bis 9 näher beschrieben. Anstelle der konstruktiv besonders einfachen Öffnung 31 bzw. 61 in der Luftklappe 3 bzw. 6 kann auch ein Frischluft-Bypass zur Fondraum-Mischkammer 12 vorgesehen werden.

In das rechte Ende des den Wärmetauscher 8 umgebenden Gehäuses münden der mittige Luftkanal 16 zum Fondraum und zwei seitlich von diesem angeordnete abgetrennte Luftkanäle 17, 17 zum Fond-Fußraum. Die Zugangsöffnung des Luftkanals 16 liegt tiefer als die der beiden seitlich angeordneten Luftkanäle 17, 17 zum Fond-Fußraum. Die Fondraum-Mischluftklappe 3 weist - wie in FIG 4 angedeutet und in FIG 9 perspektivisch dargestellt - eine mittige Frischluftdurchlaß-Öffnung 31 an ihrer oberen Randseite auf, die für den Verschluß bzw. die Öffnung der Einmündungsöffnung des Luftkanals 16 zuständig ist; für die Schließung bzw. Öffnung der Mündungen der Luftkanäle 17, 17 sind die seitlichen höher liegenden Randbereiche 32, 33 der Mischluftklappe 3 vorgesehen.

Durch die aus den FIG 5 bis 9 ersichtliche Wandkonstruktion der Einmündungen der Luftkanäle 16 bzw. 17, 17 wird erreicht, daß bei der oberen Schließstellung der Mischluftklappe 3 gemäß FIG 5 weder in den Luftkanal 16 noch in die Luftkanäle 17, 17 Warmluft eintreten kann, vielmehr diese über die Öffnung 61 der Luftklappe 6 und den unterhalb des Wärmetauschers 8 verlaufenden Luftkanal voll mit Frischluft beschickbar sind, daß bei der Stellung der Mischluftklappe 3 gemäß FIG 6 der Zutritt von Warmluft der Ausgangsseite des Wärmetauschers 8 zum Luftkanal 16 noch voll gesperrt, jedoch zu den Luftkanälen 17, 17 bereits geöffnet ist, daß bei der Stellung der Mischluftklappe 3 gemäß FIG 7 sowohl in den Luftkanal 16 als auch in die Luftkanäle 17, 17 Warmluft, jedoch mit höheren Anteil eintritt und daß bei der Stellung der Mischluftklappe 3 gemäß FIG 8 ein Frischluftanteil nur dem Luftkanal 16 zuführbar ist, da letztere an ihrer unteren, der anströmenden Frischluft zugewandten Seite durch die Randbereiche 32, 33 der Mischluftklappe 3 und einen nach unten verlagerten Seitenwandbereich 161 in den Trennwänden des Luftkanals 16 zu den beidseitigen Luftkanälen 17, 17 gegen Frischluft verschlossen der Luftkanal 16 jedoch durch die Luftdurchlaß-Öffnung 31 zur Unterseite des Wärmetauschers 8 und damit für Frischluft noch geöffnet ist.

Insgesamt ist also die erfindungsgemäße Ausführung gekennzeichnet durch einen dem Luftkanal 16 zum Fondraum zugeordneten Frischluftdurchlaß (Öffnung 31) für die Fondraum-Mischluftklappe 3 und einen Vorlauf der Öffnung der Austrittsseite des Wärmetauschers 8 zu dem Luftkanal 17 zum Fond-Fußraum bei Bewegung der Mischluftklappe 3 aus ihrer ersten Schließstellung an der Warmluft-Austrittsseite des Wärmetauschers 8 bzw. einem Nachlauf des Frischluftdruchlasses (Öffnung 31) zu dem Luftkanal 16 zum Fondraum bei Bewegung der Mischluftklappe 3 in ihre zweite Schließstellung an der Frischluft-Eintrittsseite des Wärmetauschers 8. Dabei teilt sich die fondraumseitige Mischkammer 12, also der Raumbereich, in dem sich Warmluft bzw. Kaltluft je nach Stellung der Mischluftklappe 3 in unterschiedlichen Verhältnissen mischen, in drei Mischteilkammer je Luftkanal 16 bzw. 17; 17 auf.

Im einzelnen wird im vorliegenden vorteilhaften Ausführungsbeispiel den angenommenen Klappenstellungen gemäß FIG 5 bis 8 etwaige jeweils folgende Luftverteilung erreicht: Bei der Stellung der Mischluftklappe 3 gemäß FIG 5 werden sowohl der Luftkanal 16 als auch die beiden Luftkanäle 17, 17 mit 100 % Frischluft versorgt, bei der Stellung der Mischluftklappe 3 gemäß FIG 6 und FIG 9 erhält der Luftkanal 16 weiterhin 100 % Frischluft, während die Luftkanäle 17, 17 mit etwa 90 % Frischluft und 10 % Warmluft gespeist werden, bei der Stellung der Mischluftklappe 3 gemäß FIG 7 erhält der Luftkanal 16 etwa 10 % Warmluft und 90 % Frischluft, während die Luftkanäle 17, 17 mit etwa 60 % Kaltluft und 40 % Warmluft gespeist werden; bei der Stellung der Mischluftklappe 3 gemäß FIG 8, d.h. bei maximaler Warmluftstellung erhalten die Luftkanäle 17, 17 praktisch 100 % Warmluft, während dem Luftkanal 16 durch die Luftdurchlaß-Öffnung 31 der Luftklappe 3 noch ein merklicher Frischluftanteil beigemischt ist.

Die insbesondere aus FIG 9 ersichtliche Anordnung der Luftkanäle 16 bzw. 17, 17 zur Versorgung des Fondraums bzw. Fond-Fußraums erlaubt neben der vorteilhaften zuvor beschriebenen Frischluftbeimischung zum Luftkanal 16 und damit zur stärkeren Erwärmung der Luft durch die Luftkanäle 17, 17 auch eine raumsparende Anordnung im Fahrzeug, wenn der Luftkanal 16 oberhalb eines Kardantunnels und die Luftkanäle 17, 17 beidseitig in Anpassung an die äußere Bauform des Kardantunnels angeordnet sind.

## Patentansprüche

1. Heiz- bzw. Klimagerät für ein Kraftfahrzeug mit einer vom Frontraum des Kraftfahrzeuges betätigbaren Luftklappe (6) zur Festlegung eines in den Frontraum über einen Wärmetauscher (8) einströmenden Warmluftanteils sowie mit einer fondraumseitigen Mischkammer (12) mit einer Fondraum-Mischluftklappe (3) zur Festlegung eines von der Eintrittsseite des Wärmetauschers (8) direkt einströmenden Kaltluftanteils bzw. eines von der Austrittsseite des Wärmetauschers (8) abgezweigten Warmluftanteils, **gekennzeichnet durch** einen Frischluftdurchlaß (Öffnung 61) für die Luftklappe (6) in jeder Betriebsstellung vor der Eintrittsseite des Wärmetauschers (8) mit einem anschließenden Frischluftkanal für den direkt einströmenden Kaltluftanteil.

2. Heiz- bzw. Klimagerät nach Anspruch 1, **gekennzeichnet dadurch** eine Öffnung (61) in Form einer randseitigen Aussparung in der Luftklappe (6).

3. Heiz- bzw. Klimagerät mit einer frontraumseitigen Mischkammer (11) mit einer Front-Mischluftklappe (2) nach Anspruch 1 und/oder 2, **gekennzeichnet durch** eine gegenseitige Einstellabhängigkeit der Luftklappe (6), der Frontraum-Mischluftklappe (2) sowie der Fondraum-Mischluftklappe (3) zwischen korrespondierenden Endstellungen.

4. Heiz- bzw. Klimagerät nach zumindest einem der Ansprüche 1 bis 3, **dadurch gekennzeichnet,** daß die Frontraum-Mischluftklappe (2), die Fondraum-Mischluftklappe (3) und die Luftklappe (6) von einem frontraumseitigen Temperatur-Einstellelement (T1) gestellt sind.

5. Heiz- bzw. Klimagerät nach einem der Ansprüche 1 bis 4, **gekennzeichnet durch** einen zum Fondraum und/oder zum Fond-Fußraum führenden Luftkanal (16 bzw.17) der fondseitigen Mischkammer (12).

6. Heiz- bzw. Klimagerät nach Anspruch 5, **gekennzeichnet durch** eine Absperrklappe (4 bzw. 5) in den zum Fondraum und/oder zum Fond-Fußraum führenden Luftkanal (16 bzw. 17) der fondseitigen Mischkammer (12).

7. Heiz- bzw. Klimagerät mit einem frontraumseitigen Bediengerät (B1) mit zumindest einem Luftverteilungs-Einstellelement (V1) nach Anspruch 6, **dadurch gekennzeichnet,** daß die Absperrklappen (4 bzw.5) der fondraumseitigen Mischkammer (12) in korrespondierende Miteinstellabhängigkeit von einem frontraumseitigen Luftverteilungs-Einstellelement (V1) gestellt sind.

8. Heiz- bzw. Klimagerät nach zumindest einem der Ansprüche 1 bis 7, **dadurch gekennzeichnet,** daß die Fondraum-Mischluftklappe (3) in Verstellabhängigkeit von einem fondraumseitigen Temperatur-Einstellelement (T2) gestellt ist.

9. Heiz- bzw. Klimagerät nach zumindest einem der Ansprüche 6 bis 8, **dadurch gekennzeichnet,** daß die Absperrklappen (4 bzw.5) in den zum Fondraum und/oder zum Fond-Fußraum führenden Luftkanälen (16 bzw. 17) der fondraumseitigen Mischkammer (12) in Einstellabhängigkeit von einer fondraumseitigen Luftverteilungs-Einstellelement (V2) gestellt sind.

10. Heiz- bzw. Klimagerät nach zumindest einem der Ansprüche 4 bis 9, **dadurch gekennzeichnet,** daß das frontraumseitige Temperatur-Einstellelement (T1) bzw. das frontraumseitige Luftverteilungs-Einstellelement (V1) Teile eines frontraumseitigen Bediengerätes (B1) und/oder das fondraumseitige Temperatur-Einstellelement (T2) bzw. das fondraumseitige Luftverteilungs-Einstellelement (V2) Teile eines fondraumseitigen Bediengerätes (B2) sind.

**11.** Heiz- bzw. Klimagerät nach zumindest einem der Ansprüche 5 bis 10, **gekennzeichnet durch** konstruktive Mittel, durch die dem Luftkanal (17) zum Fond-Fußraum ein höherer Warmluftanteil als dem Luftkanal (16) zum Fondraum bzw. dem Luftkanal (16) zum Fondraum ein höherer Frischluftanteil als dem Luftkanal (17) zum Fond-Fußraum zuführbar ist.

**12.** Heiz- bzw. Klimagerät nach Anspruch 11, **gekennzeichnet durch** zumindest eine Luftleitschaufel (34) an der Mischluftklappe (3) im Sinne einer stärkeren Warmluft-Luftströmung in Richtung der Mündung des Luftkanals (17) zum Fond-Fußraum.

**13.** Heiz- bzw. Klimagerät nach Anspruch 11, **gekennzeichnet durch** einen dem Luftkanal (16) zum Fondraum zugeordneten Frischluftdurchlaß (Öffnung 31) für die Fondraum-Mischluftklappe (3) und einem Vorlauf der Öffnung der Austrittsseite des Wärmetauschers (8) zu dem Luftkanal (17) zum Fond-Fußraum bei Bewegung der Mischluftklappe (3) aus ihrer ersten Schließstellung an der Warmluft-Austrittsseite des Wärmetauschers (8) bzw. einem Nachlauf des Frischluftdruchlasses (Öffnung 31) zu dem Luftkanal (16) zum Fondraum bei Bewegung der Mischluftklappe (3) in ihre zweite Schließstellung an der Frischluft-Eintrittsseite des Wärmetauschers (8).

**14.** Heiz- bzw. Klimagerät nach zumindest einem der Ansprüche 5 bis 13, **dadurch gekennzeichnet,** daß für die fondraumseitige Mischkammer (12) ein mittiger, insbesondere oberhalb eines Kardanwellentunnels verlaufender Luftkanal (16) zum Fondraum und beidseitig je ein zum Fond-Fußraum verlaufender Luftkanal (17, 17) vorgesehen sind.

**15.** Heiz- bzw. Klimagerät nach Anspruch 13 bzw. 14, **gekennzeichnet durch** eine mittige Frischluftdurchlaß-Öffnung (31) an der oberen Randseite der Mischluftklappe (3) mit seitlichen höherliegenden Randbereichen (32, 33), die den entsprechend gegenüber dem Luftkanal (16) zum Fondraum höheren Luftkanal bzw. Luftkanälen (17, 17) zum Fond-Fußraum zugeordnet sind.

**Claims**

**1.** A heating and air-conditioning device for a motor vehicle with an air flap (6), activated from the front space of the motor vehicle for determining the proportion of warm air flowing into the front space by way of a heat exchanger (8), as well as with a mixing chamber (12) on the rear space side including a rear space-mixing air flap (3) for determining a proportion of cold air flowing-in directly from the inlet side of the heat exchanger (8) or a proportion of warm air branched from the outlet side of the heat exchanger (8), characterised by a fresh air throughlet (opening 61) for the air flap (6) in each operational position in front of the inlet side of the heat exchanger (8) with a connecting fresh air channel for the proportion of cold air, flowing-in directly.

**2.** A heating and air-conditioning device according to claim 1, characterised by an opening (61) in the form of an edge-side recess in the air flap (6).

**3.** A heating and air-conditioning device with a front space-mixing chamber (11) with a front-mixing air flap (2) according to claim and/or 2, characterised by a mutual adjusting dependence of the air flap (6), the front space-mixing air flap (2) as well as the rear space-mixing air flap (3) between corresponding end positions.

**4.** A heating and air-conditioning device according to at least one of the claims 1 to 3, characterised in that the front space-mixing air flap (2), the rear space-mixing air flap (3) and the air flap (6) are set by a front space side temperature-adjustment element (T1).

**5.** A heating or air-conditioning device according to one of claims 1 to 4, characterised by an air channel (16 or 17) of the rear side-mixing chamber (12) leading to the rear space and/or to the rear foot space.

**6.** A heating or air-conditioning device according to claim 5, characterised by a throttle valve (4 or 5) in the air channel (16 or 17) leading to the rear space and/or to the rear foot space of the rear side-mixing chamber (12).

**7.** A heating or air-conditioning device with a front space side operating device (B1) with at least one air distribution-adjustment element (V1) according to claim 6, characterised in that the throttle valves (4 or 5) of the rear side-mixing chamber (12) are adjusted in corresponding co-dependence by a front space side air distribution-adjustment element (V1).

**8.** A heating or air-conditioning device according to at least one of claims 1 to 7, characterised in that the rear space-mixing air flap (3) is adjusted in dependence of a rear space side temperature adjustment element (T2).

**9.** A heating or air-conditioning device according to at least one of claims 6 to 8, characterised in that the throttle valves (4 or 5) are adjusted in the air channels (16 or 17) of the rear space side-mixing chamber (12) leading to the rear space and/or to the rear foot space in dependence of a rear space side air distribution-adjustment element (V2).

10. A heating and air-conditioning device according to at least one of claims 4 to 9, characterised in that the front space side temperature-adjustment element (T1) or the front space side air distribution-adjustment element (V1) are parts of a front space side-control unit (B1) and/or the rear space side temperature-adjustment element (T2) or the rear side air distribution-adjustment element (V2) are parts of a rear side-control unit (B2).

11. A heating and air-conditioning device according to at least one of claims 5 to 10, characterised by constructive means, through which a higher proportion of warm air is able to be supplied to the air channel (17) to the rear foot space than to the air channel (16) to the rear space or a higher proportion of fresh air can be supplied to the air channel (16) to the rear space than to the air channel (17) to the rear foot space.

12. A heating or air-conditioning device according to claim 11, characterised by at least one air guide vane (34) on the mixing air flap (3) for the purpose of a stronger warm air current in the direction of the mouth of the air channel (17) to the rear foot space.

13. A heating or air-conditioning device according to claim 11, characterised by a fresh air throughlet (opening 31) allocated to the air channel (16) to the rear space for the rear space mixing air flap (3) and a flow pipe of the opening of the outlet side of the heat exchanger (8) to the air channel (17) to the rear foot space with movement of the mixing air flap (3) from its first closed position on the warm air outlet side of the heat exchanger (8) or the outlet of the fresh air throughlet (opening 31) to the air channel (16) to the rear space with movement of the mixing air flap (3) into its second closed position on the fresh air inlet side of the heat exchanger (8).

14. A heating or air-conditioning device according to at least one of claims 5 to 13, characterised in that for the rear space side mixing chamber (12) there is provided a central air channel (16) extending in particular above a Cardan shaft tunnel to the rear space and at both sides in each case an air channel (17, 17) extending to the rear foot space.

15. A heating or air-conditioning device according to claim 13 or 14, characterised by a central fresh air throughlet opening (31) on the upper edge-side of the mixing air flap (3) with lateral higher-lying edge regions (32,33) which are allocated to the air channel or air channels (17, 17) to the rear foot space lying correspondingly higher compared to the air channel (16) to the rear space.

**Revendications**

1. Installation de chauffage et de climatisation pour un véhicule automobile comportant un volet d'aération (6) pouvant être actionné à partir de l'espace avant du véhicule automobile et servant à déterminer un volume d'air chaud introduit dans l'espace avant par l'intermédiaire d'un échangeur de chaleur (8), ainsi qu'une chambre de mélange (12), située dans l'espace arrière et comportant un volet arrière d'aération (3) pour passage du mélange d'air pour déterminer un volume d'air froid pénétrant directement à partir du côté entrée de l'échangeur de chaleur (8) ou d'un volume d'air chaud dérivée du côté de la sortie de l'échangeur de chaleur (8), caractérisée par un passage pour l'air frais (ouverture 61) pour le volet d'aération (6) dans n'importe quelle position de fonctionnement, à l'avant du côté entrée de l'échangeur de chaleur (8), avec un canal véhiculant l'air frais, qui s'y raccorde et prévu pour le volume d'air frais pénétrant directement.

2. Installation de chauffage ou de climatisation suivant la revendication 1, caractérisée par une ouverture (61) sous la forme d'un évidement marginal ménagé dans le volet d'aération (6).

3. Installation de chauffage ou de climatisation comportant une chambre de mélange (11) située dans l'espace avant et comportant un volet d'aération avant (2) pour le passage du mélange d'air, suivant la revendication 1 et/ou 2, caractérisée par une dépendance réciproque du réglage du volet d'aération (6), du volet d'aération (2) pour le passage du mélange d'air dans l'espace avant ainsi que du volet d'aération (3) pour le passage du mélange d'air dans l'espace arrière, entre des positions extrêmes correspondantes.

4. Installation de chauffage ou de climatisation selon au moins l'une des revendications 1 à 3, caractérisée par le fait que le volet d'aération (2) pour le passage du mélange d'air dans l'espace avant, le volet d'aération (3) pour le passage du mélange d'air dans l'espace arrière et le volet d'aération (6) sont réglés au moyen d'un élément de réglage de température (T1), situé du côté de l'espace avant.

5. Installation de chauffage ou de climatisation suivant l'une des revendications 1 à 4, caractérisé par un canal de circulation d'air (16 ou 17), qui aboutit à l'espace arrière et/ou à l'espace arrière au .niveau des pieds, de la chambre de mélange (12) située sur le côté arrière.

6. Installation de chauffage ou de climatisation suivant la revendication 5, caractérisée par un volet de blocage (4 ou 5) situé dans le canal de circulation d'air (16 ou 17), qui aboutit à l'espace arrière et/ou à l'espace arrière au niveau des pieds, de la chambre de mélange (12) située côté arrière.

7. Installation de chauffage ou de climatisation comportant un appareil de commande (B1) situé du côté de l'espace avant et comportant au moins un élément (V1) de réglage de la répartition de l'air suivant la revendication 6, caractérisé par le fait que les volets de blocage (4 ou 5) de la chambre de mélange (12) située sur le côté de l'espace arrière, sont réglés, selon une dépendance correspondante de réglage conjoint, par un élément (V1) de réglage de la répartition de l'air, situé du côté de l'espace avant.

8. Installation de chauffage ou de climatisation suivant au moins l'une des revendications 1 à 7, caractérisée par le fait que le volet d'aération (3) pour le passage du mélange d'air au niveau de l'espace arrière est réglé en fonction du réglage d'un élément (T2) de réglage de la température, qui est situé du côté de l'espace arrière.

9. Installation de chauffage ou de climatisation suivant au moins l'une des revendications 6 à 8, caractérisée par le fait que les volets de blocage (4 ou 5) situés dans les canaux de circulation d'air (16 ou 17), qui aboutissent à l'espace arrière et/ou à l'espace arrière au niveau des pieds, de la chambre de mélange (12) située sur le côté de l'espace arrière, sont réglés en fonction du réglage d'un élément (V2) de réglage de la répartition de l'air, situé du côté de l'espace arrière.

10. Installation de chauffage ou de climatisation suivant au moins l'une de revendications 4 à 9, caractérisée par le fait que l'élément (T1) de réglage de la température, situé sur le côté de l'espace avant, ou l'élément (V1) de réglage de la répartition de l'air, situé sur le côté de l'espace avant, sont des parties d'un appareil de commande (B1) situé du côté de l'espace avant et/ou l'élément (T2) de réglage de la température, situé sur le côté de l'espace arrière, ou l'élément (V2) de réglage de la répartition de l'air, situé sur le côté de l'espace arrière, font partie d'un appareil de commande (B2) situé du côté de l'espace arrière.

11. Installation de chauffage ou de climatisation suivant au moins l'une des revendications 5 à 10, caractérisée par des moyens constructifs grâce auxquels un volume accru d'air chaud peut être envoyé au canal de circulation d'air (17) en direction de l'espace arrière situé au niveau des pieds par rapport au volume d'air envoyé au canal de circulation d'air (16) en direction de l'espace arrière ou par rapport au canal de circulation d'air (16) en direction de l'espace arrière, qu'au canal de circulation d'air (16) est envoyé, en direction de l'espace arrière, un volume d'air frais supérieur à celui envoyé au canal d'air (17) aboutissant à l'espace arrière, au niveau des pieds.

12. Installation de chauffage ou de climatisation suivant la revendication 11, caractérisée par au moins une palette déflectrice de l'air (34) sur le volet d'aération (3) pour le mélange d'air donnant un plue grand courant d'air chaud dans la direction de l'embouchure du canal de circulation d'air (17) à l'espace arrière au niveau des pieds.

13. Installation de chauffage ou de climatisation suivant la revendication 11, caractérisée par un passage d'air frais (ouverture 31), qui est associé au canal de circulation d'air (16) aboutissant à l'espace arrière, pour le volet d'aération (3) pour le passage du mélange pour l'air de mélange envoyé à l'espace arrière, et une commande avancée de l'ouverture du côté sortie de l'échangeur de chaleur (8) en direction du canal de circulation d'air (17) aboutissant à l'espace arrière au niveau des pieds, lors du déplacement du volet d'aération (3) pour le passage du mélange d'air depuis sa première position fermée sur le côté sortie d'air chaud de l'échangeur de chaleur (8) ou une commande retardée du passage d'air frais (ouverture 31) en direction du canal de circulation d'air (16) dirigé vers l'espace arrière lors du déplacement du volet d'aération (3) pour le passage du mélange d'air dans sa seconde position fermée sur le côté d'entrée d'air frais de l'échangeur de chaleur.

14. Installation de chauffage ou de climatisation suivant au moins l'une des revendications 5 à 13, caractérisée par le fait que pour la chambre de mélange (12), située du côté de l'espace arrière, il est prévu un canal central de circulation d'air (16) qui s'étend au-dessus du tunnel de l'arbre de cardan en direction de l'espace arrière et, des deux côtés, des canaux de circulation d'air respectifs (17,17) qui s'étendent en direction de l'espace arrière au niveau des pieds.

15. Installation de chauffage ou de climatisation suivant la revendication 13 ou 14, caractérisée par une ouverture (31) centrale pour de l'air frais au bord marginal supérieur du volet d'aération (3) pour le mélange d'air avec des parties marginales (32,33) latérales plus élevées, qui sont associées au canal ou aux canaux de circulation d'air (17) menant à l'espace arrière au niveau des pieds et plus élevés que le canal de circulation d'air (16) menant à l'espace arrière au niveau des pieds.

B1

FIG 1

L1        T1        V1

B2

FIG 2

T2        V2

1        9        15        14

11

15

13

(32)    61(31)    (33)

6(3)

FIG 4

2        3        34        12        16

a2  a1    b1        b2        b3

7

a3

6        8

5        17

4

FIG 3

FIG 5

FIG 6

FIG 7

FIG 8

FIG 9